(19) Europäisches Patentamt / European Patent Office / Office européen des brevets

(11) **EP 2 862 219 B1**

(12) **EUROPEAN PATENT SPECIFICATION**

(45) Date of publication and mention
of the grant of the patent:
**30.12.2015 Bulletin 2015/53**

(21) Application number: **13812059.7**

(22) Date of filing: **11.10.2013**

(51) Int Cl.:
*H01M 4/58* (2010.01)   *H01M 4/62* (2006.01)
*H01M 10/052* (2010.01)   *H01M 2/34* (2006.01)
*H01M 4/505* (2010.01)   *H01M 4/525* (2010.01)
*H01M 10/42* (2006.01)   *H01M 4/02* (2006.01)

(86) International application number:
**PCT/IB2013/002266**

(87) International publication number:
**WO 2014/060814 (24.04.2014 Gazette 2014/17)**

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2012 JP 2012229705**

(43) Date of publication of application:
**22.04.2015 Bulletin 2015/17**

(73) Proprietor: **TOYOTA JIDOSHA KABUSHIKI
KAISHA**
**Toyota-shi, Aichi-ken, 471-8571 (JP)**

(72) Inventors:
• **MIZUNO, Tomoyuki**
**Toyota-shi**
**Aichi-ken 471-8571 (JP)**

• **OYAMA, Yutaka**
**Toyota-shi**
**Aichi-ken 471-8571 (JP)**
• **TAKAHASHI, Keiichi**
**Kadoma-shi**
**Osaka 571-8501 (JP)**
• **TANIGUCHI, Akihiro**
**Kadoma-shi**
**Osaka 571-8501 (JP)**
• **FUJITA, Hideaki**
**Kadoma-shi**
**Osaka 571-8501 (JP)**

(74) Representative: **TBK**
**Bavariaring 4-6**
**80336 München (DE)**

(56) References cited:
**EP-A1- 2 034 542       WO-A1-2012/049779**
**US-A1- 2007 111 101**

**Description**

BACKGROUND OF THE INVENTION

1. Field of the Invention

The invention relates to a secondary battery. In the specification, a "secondary battery" is a term that means a general electric storage device capable of repeatedly charging, and includes so-called electric storage devices such as a lithium ion secondary battery, a nickel hydrogen battery, a nickel cadmium battery.

2. Description of Related Art

In the specification, a "lithium ion secondary battery" means a secondary battery that makes use of lithium ions as an electrolyte ion and performs charge/discharge by migration of electrons accompanying lithium ions between a positive electrode and a negative electrode. A battery generally called as a "lithium secondary battery" is a typical example included in the lithium ion secondary battery in the specification.

The lithium ion secondary battery uses a carbon-based material capable of storing and releasing lithium ions as a negative electrode active material, a lithium transition metal composite oxide as a positive electrode active material, and an electrolytic solution in which a lithium salt is dissolved in an organic solvent.

In the lithium ion secondary battery, in an overcharge state, lithium is excessively released from a positive electrode, and, in a negative electrode, lithium is excessively inserted. Therefore, both electrodes of the positive electrode and negative electrode become thermally unstable. When the both of positive electrode and negative electrode become thermally unstable, eventually the organic solvent in the electrolytic solution is decomposed to cause an abrupt exothermic reaction. Therefore, the battery extraordinarily produces heat to decrease safety of the battery. With respect to such the problem, for example. Japanese Patent Application Publication No. 2001-15155 (JP 2001-15155 A) discloses a lithium ion secondary battery including a current interrupt device (CID) that interrupts a current when a gas pressure inside the battery becomes more than a predetermined pressure in a battery container. In the electrolytic solution of the lithium ion secondary battery, a gas generating agent that generates gas when a predetermined overcharge state is reached is added.

In the lithium ion secondary battery disclosed in JP 2001-15155 A , when the overcharge state is reached, the gas generating agent added in the electrolytic solution starts a polymerization reaction to generate a gas. When the overcharge state continues further, an amount of generated gas increases, a pressure inside a battery case becomes higher, and a sealing plate for interrupting a current operates to interrupt an overcharge current. The battery can be mechanically stopped thereby.

Further, as the lithium ion secondary battery, in Japanese Patent. Application Publication No. 2012-109166 (JP 2012-109166 A), and WO 2011/067982 A, a secondary battery that uses hollow positive electrode active material particles (positive electrode active material particles having a hollow section) is disclosed. When the hollow positive electrode active material particles are used, in a positive electrode active material layer, an electrolytic solution infiltrates not only in a circumference of the positive electrode active material particles but also in the hollow section (the inside of the positive electrode active material particles). Therefore, in an electrode reaction, the positive electrode active material particles smoothly release or store lithium ions. It is said that an increase in resistance of the secondary battery can be held low thereby, and performance of discharge at a high rate and rapid charge are improved. Also WO 2012/049779, EP 1 065 744 and US 2007/0111101 refer to lithium batteries.

Hereinafter, it will be studied to adopt the hollow positive electrode active material particles as the positive electrode active material particles, and to adopt the current interrupt device. In the current interrupt device, the gas generating agent that generates a gas in an overcharge state is added in the electrolytic solution, and a current path is interrupted when an internal pressure inside a battery case becomes a predetermined value or higher. In an overcharge state, since, in particular, a potential of the positive electrode becomes high, the gas generating agent contained in the electrolytic solution infiltrated in the positive electrode active material layer reacts to generate a gas. When the internal pressure of the battery case becomes higher than the predetermined pressure because of generated gas, the current interrupt device operates to interrupt the current path to stop the reaction of the battery. However, in the battery provided with the current interrupt device, when the hollow positive electrode active material particles are adopted as the positive electrode active material particles, there is likelihood that the gas generation may be dulled, and the current interrupt device may be delayed in actuation. The current interrupt device is desirable to operate in a short time when the predetermined condition is reached.

SUMMARY OF THE INVENTION

The invention is a secondary battery according to claim 1.

The electrode body includes a positive electrode current collector, and a positive electrode active material layer formed on (held on) the positive electrode current collector. The positive electrode active material layer includes a plurality of hollow positive electrode active material particles, a plurality of conductive material particles, and a plurality of void supporting particles. The void supporting particles are particles configured to provide voids having a fine pore diameter of 0.5 $\mu$m or more in the positive electrode active material layer. The conductive material particles are particles configured to provide an electrical continuity of the positive electrode active material layer. Further, a ratio of an average particle size B of the void supporting particles to an average particle size A of the hollow positive electrode active material particles (i.e., B/A) is $1/3 \leq (B/A) \leq 2$, and a crushing strength of the void supporting particles is larger than a crushing strength of the conductive material particles.

According to such secondary battery, the positive electrode active material layer can properly ensure voids, can properly ensure an amount of gas generated by the gas generating agent, can increase an amount of generated gas while maintaining output characteristics high, and can properly work the current interrupt device.

According to an aspect not forming part of the invention of the invention, the void supporting particles may contain graphite particles having a particle density of 1.1 g/cm$^3$ or more. Further, a weight ratio of the graphite particles in the positive electrode active material layer may be 2% by weight or more and 5% by weight or less.

In the invention, the crushing strength of the void supporting particles may be 10 MPa or more.

In an aspect of the invention, a ratio of the voids in the positive electrode active material layer may be 20% or more.

In the aspect of the invention, a ratio of an average particle size C of the conductive material particles to the average particle size A of the hollow positive electrode active material particles (i.e., C/A) may be (C/A)<0.1. The conductivity of the positive electrode active material layer can be ensured to be high thereby, and the output characteristics at a high rate can be ensured at a high level.

In an aspect of the invention, the conductive material particles may be particles of at least one kind selected from carbon blacks.

In an aspect of the invention, each of the hollow positive electrode active material particles may have a shell section formed of a lithium transition metal oxide, a hollow section formed inside of the shell section, and a through-hole penetrated through the shell section. By using such hollow positive electrode active material particles, the output characteristics at a high rate can be ensured at a high level.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a cross-section view of a lithium ion secondary battery according to one embodiment of the invention;
FIG. 2 is a view showing a wound electrode body incorporated in the lithium ion secondary battery;
FIG. 3 is a schematic view showing a cross-section of a positive electrode active material layer:
FIG. 4 is a cross-sectional SEM image of preferable hollow positive electrode active material particles;
FIG. 5 is a view schematically showing a battery for evaluation test;
FIG. 6 is a development view obtained by developing a positive electrode sheet of the battery for evaluation test;
FIG. 7 is a development view obtained by developing a negative electrode sheet of the battery for evaluation test; and
FIG. 8 is a view showing a vehicle on which a battery is mounted.

DETAILED DESCRIPTION OF EMBODIMENTS

Hereinafter, a secondary battery relating to one embodiment of the invention will be described. The embodiment described here is not intended to limit the invention thereto. Further, dimensional relationships (length, width, thickness and so on) in the respective drawings do not reflect actual dimensional relationships. Still further, members and portions having the same actions have the same marks, and duplicated descriptions thereof are omitted or simplified.

Hereinafter, a lithium ion secondary battery having a form where a wound type electrode body (hereinafter, referred to as a "wound electrode body") and a nonaqueous electrolytic solution are housed in a rectangular (here, cuboid boxy) case will be cited as an example. A battery structure is not limited to exemplified examples, in particular, to the rectangular battery.

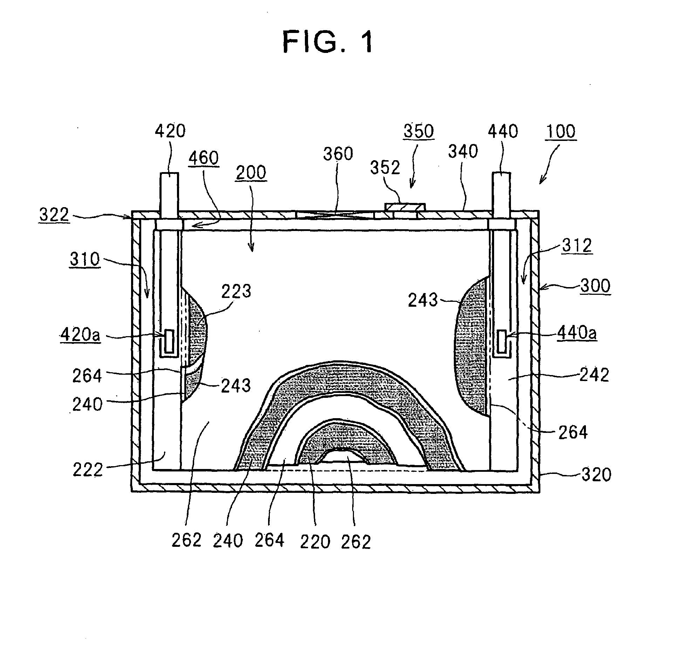

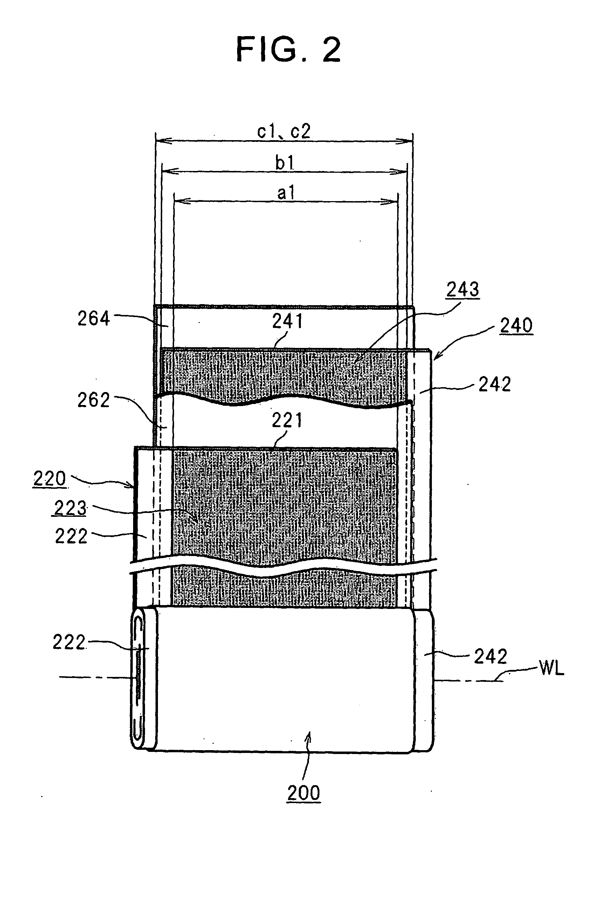

FIG. 1 is a cross-section view of a lithium ion secondary battery 100 relating to one embodiment of the invention. FIG. 2 is a view showing a wound electrode body 200 incorporated in the lithium ion secondary battery 100.

The lithium ion secondary battery 100 relating to one embodiment of the invention has a flat rectangular battery case (that is, external container) 300 such as shown in FIG. 1. In the lithium ion secondary battery 100, as shown in FIG. 2, a flat wound electrode body 200 is housed together with a not shown liquid electrolyte (electrolytic solution) in the battery case 300.

The battery case 300 includes a boxy (that is, bottomed cuboid) case body 320 and a sealing plate (cap body) 340. The case body 320 has an opening section at one end (corresponding to an upper end section in a usual use state of the battery 100). The sealing plate 340 includes a rectangular plate member that is attached to the opening section to clog the opening section.

A material of the battery case 300 is not particularly limited, as long as it is the same as that used in a conventional sealed battery. The battery case 300 is preferably formed mainly of a light metal material having excellent thermal conductivity. Examples of the metal materials like this include aluminum, stainless steel, nickel-plated steel, and the like. The battery case 300 (battery case 320 and sealing plate 340) relating to the embodiment is formed of aluminum or an alloy mainly made of aluminum.

As shown in FIG. 1, the sealing plate 340 includes a positive electrode terminal 420 and a negative electrode terminal 440, which are used for external connection. A thin safety valve 360 and a liquid injection port 350 are formed between both terminals 420, 440 of the sealing plate 340. The safety valve 360 is formed so that when an internal pressure of the battery case 300 rises to a predetermined level (setup valve opening pressure: about 0.3 to 1.0 MPa, for example) or more, the internal pressure is released. In FIG. 1, the liquid injection port 350 is sealed with a sealant 352 after injection.

The wound electrode body 200 (electrode body) includes, as shown in FIG. 2, a longitudinal sheet-like positive electrode (positive electrode sheet 220), a longitudinal sheet-like negative electrode (negative electrode sheet 240), and two longitudinal sheet-like separators (separators 262, 264).

The positive electrode sheet 220 includes a belt-like positive electrode current collector foil 221 and a positive electrode active material layer 223. As the positive electrode current collector foil 221, for example, a metal foil suitable for the positive electrode can be used. In the embodiment, as the positive electrode current collector foil 221, a belt-like aluminum foil having a thickness of about 15 $\mu$m is used. An uncoated section 222 is disposed along a peripheral section on one side in a width direction of the positive electrode current collector foil 221. In the exemplified example, the positive electrode active material layer 223 is held on both surfaces of the positive electrode current collector foil 221 except the uncoated section 222 disposed on the positive electrode current collector foil 221. The positive electrode active material layer 223 includes positive electrode active material particles. Here, the positive electrode active material layer 223 is formed by coating a positive electrode mixture containing the positive electrode active material particles on the positive electrode current collector foil 221, drying the positive electrode mixture, and pressing them into a predetermined thickness.

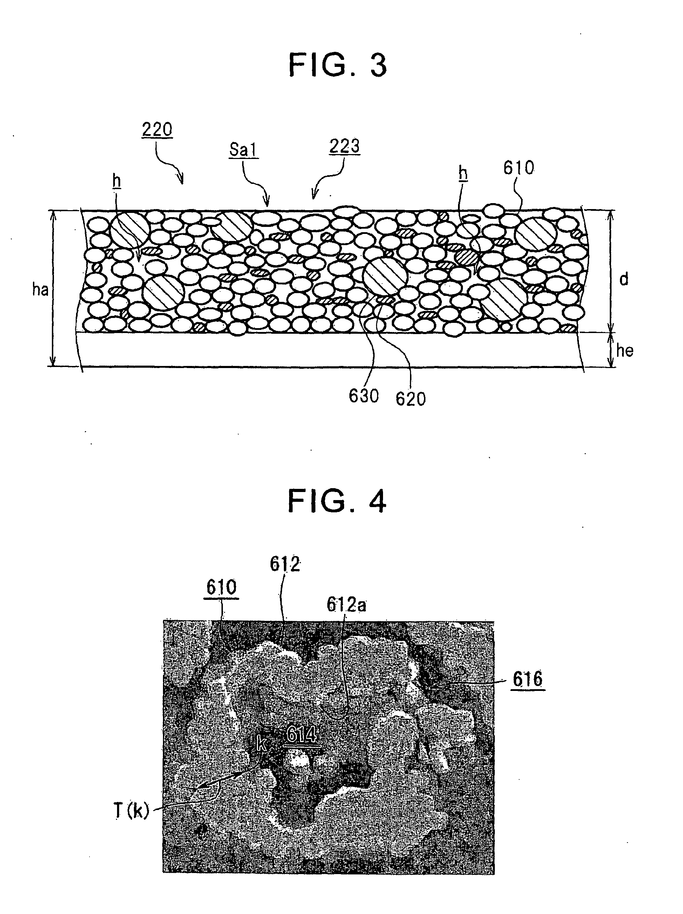

Now, FIG. 3 is a schematic view showing a cross-section of the positive electrode active material layer 223. In the embodiment, the positive electrode active material layer 223 includes a plurality of hollow positive electrode active material particles 610, a plurality of conductive material particles 620 and a plurality of void supporting particles 630. The void supporting particles 630 is different from the hollow positive electrode active material particles 610 and the conductive material particles 620. The void supporting particles 630 hinder the hollow positive electrode active material particles 610 from being crushed, and ensure necessary voids thereby. Such positive electrode active material layer 223 will be described in detail later.

The negative electrode sheet 240 includes, as shown in FIG. 2, a belt-like negative electrode current collector foil 241 and a negative electrode active material layer 243. As the negative electrode current collector foil 241, for example, a metal foil suitable for the negative electrode can be used. In the embodiment, as the negative electrode current collector foil 241, a belt-like copper foil having a thickness of about 10 $\mu$m is used. An uncoated section 242 is disposed along a peripheral section on one side in a width direction of the negative electrode current collector foil 241. The negative electrode active material layer 243 is held on both surfaces of the negative electrode current collector foil 241 except the uncoated section 242 disposed on the negative electrode current collector foil 241. In the negative electrode active material layer 243, negative electrode active material particles are included. Here, the negative electrode active material layer 243 is formed by coating a negative electrode mixture containing the negative electrode active material particles on the negative electrode current collector foil 241, drying the negative electrode mixture, and pressing them into a predetermined thickness.

As the negative electrode active material particles contained in the negative electrode active material layer 243, one kind or two or more kinds of materials that have been used in lithium ion secondary batteries may be used without particular limitation. Preferable examples include carbon-based materials such as graphite carbon, amorphous carbon, and the like, lithium transition metal oxides, lithium transition metal nitrides, and the like. Further, preferable examples of the separator sheets include separator sheets formed of porous polyolefin resins.

The separators 262, 264 are, as shown in FIG. 2, a member for separating the positive electrode sheet 220 and the negative electrode sheet 240. In the example, the separators 262, 264 are formed of a belt-like sheet material having a plurality of fine pores and a predetermined width. As the separators 262, 264, for example, a separator having a single layer structure or a separator having a multilayer structure, which is made of porous polyolefin resin, may be used. In the example, as shown in FIG. 2, a width b1 of the negative electrode active material layer 243 is slightly larger than.a width al of the positive electrode active material layer 223. Further, widths c1 and c2 of the separators 262 arid 264 are slightly larger than a width b1 of the negative electrode active material layer 243 (c1, c2>b1>a1).

In the example shown in FIG. 2, the separators 262 and 264 are formed of a sheet-like member. The separators 262 and 264 may be a member that electrically insulates between the positive electrode active material layer 223 and the negative electrode active material layer 243, and allows the electrolyte to migrate therein. Therefore, the separator is not limited to the sheet-like member. The separators 262 and 264 may be formed of, in place of the sheet-like member, for example, a layer of insulating particles formed on a surface of the positive electrode active material layer 223 or negative electrode active material layer 243. Here, as the insulating particles, insulating inorganic fillers (for example, fillers such as metal oxide, metal hydroxide, and the like), or insulating resin particles (for example, particles of such as polyethylene, polypropylene, and the like) may be used.

As the electrolytic solution (nonaqueous electrolytic solution), the same as that has been used in lithium ion secondary batteries may be used without particular limitation. Such nonaqueous electrolytic solution typically has a composition where a supporting salt is contained in an appropriate nonaqueous solvent. As the nonaqueous solvents, for example, one kind or two or more kinds selected from the group including ethylene carbonate, propylene carbonate, dimethyl carbonate, diethyl carbonate, ethyl methyl carbonate, 1,2-dimethoxyethane, 1,2-diethoxyethane, tetrahydrofuran, 1,3-dioxolan and the like may be used. Further, as the supporting salts, for example, lithium salts such as $LiPF_6$, $LiBF_4$, $LiAsF_6$, $LiCF_3SO_3$, $LiC_4F_9SO_4$, $LiN(CF_3SO_2)_2$, $LiC(CF_3SO_2)_3$, and the like may be used. As an example, a nonaqueous electrolytic solution that contains $LiPF_6$ at a concentration of about 1 mol/L in a mixed solvent of ethylene carbonate and diethyl carbonate (for example, mass ratio: 1: 1) may be used.

According to the embodiment, the nonaqueous electrolytic solution contains, for example, a gas generating agent that when a battery voltage becomes a predetermined voltage or more, reacts and generates a gas. As such gas generating agents, for example, cyclohexylbenzene (CHB), biphenyl (BP) or the like may be used. For example, during overcharge of about 4.35 V to 4.6 V, the following polymerization reaction of cyclohexylbenzene (CHB) and biphenyl (BP) is activated to generate a gas (here, a hydrogen gas).

$$(CHB)_n[C_{12}H_{16}] \rightarrow (C_{12}H_{14})_n + nH_2 \cdot (BP)_n[C_{12}H_{10}] \rightarrow (C_{12}H_8)_n + nH_2$$

An addition amount of the gas generating agent with respect to the nonaqueous electrolytic solution may be set to, for example, about 0.05% by weight or more and 4.0% by weight or less. The addition amount of the gas generating agent, without limiting to the above, may be adjusted so as to generate a predetermined amount of a gas under a predetermined condition. Further, the gas generating agent is not limited to cyclohexylbenzene (CHB) and biphenyl (BP). Here, $(C_{12}H_{14})_n$ or $(C_{12}H_8)_n$ can be generated as a polymerization film in a gas generating polymerization reaction.

In the embodiment, the wound electrode body 200 is, as shown in FIG. 2, pushed and bent flat in one direction orthogonal to a winding axis WL. In an example shown in FIG. 2, the uncoated section 222 of the positive electrode current collector foil 221 and the uncoated section 242 of the negative electrode current collector foil 241 respectively are spirally exposed on both sides of the separators 262, 264. In the embodiment, as shown in FIG. 1, intermediate sections of the uncoated section 222 (242) is gathered together and welded to current collector tabs 420a, 440a of the electrode terminals 420, 440 (internal terminals) disposed inside the battery case 300. In the wound electrode body 200 like this, the electrolytic solution intrudes from an axis direction of the winding axis WL into the inside of the wound electrode body 200.

Further, in the lithium ion secondary battery 100, as was described above, the gas generating agent is added in the electrolytic solution. During overcharge of about from 4.35 V to 4.6 V, a gas is generated and a pressure in the battery case becomes high. A current interrupt device 460 is a mechanism that, when the pressure inside the battery case became extraordinarily high, interrupts a current path. In the embodiment, the current interrupt device 460 is constituted, as shown in FIG. 1, inside the positive electrode terminal 420 to interrupt the conductive path of a battery current in the positive electrode. A specific structure of the current interrupt device 460 is disclosed in, for example, JP 2001-15155 A. The current interrupt device disclosed in JP 2001-15155 A can be appropriately adopted as the current interrupts device 460 of the lithium ion secondary battery 100. Therefore, here, a specific structure of the current interrupt device 460 is not particularly referred to. As the specific structure of the current interrupt device 460, various mechanisms can be adopted without limiting to structures disclosed in JP 2001-15155 A.

Hereinafter, the positive electrode active material layer 223 will be more detailed.

FIG. 3 is a schematic view showing a cross-section of the positive electrode active material layer 223. The positive electrode active material layer 223 includes, as shown in FIG. 3, hollow positive electrode active material particles 610, conductive material particles 620, void supporting particles 630, and a binder (omitted from showing).

The positive electrode active material particles 610 include at least partially hollow particles. The hollow positive electrode active material particle 610 may be preferably a particle having a relatively large hollow section. Here, FIG. 4 is a sectional SEM image of the preferable hollow positive electrode active material particle 610. The hollow positive electrode active material particle 610 shown in FIG. 4 includes a shell section 612, a hollow section 614, and a through-hole 616, and can be called also as a porous hollow particle. A manufacturing method of such hollow positive electrode active material particles 610 is disclosed in, for example, WO2011/067982 A. Therefore, a detailed description thereof will be omitted here.

Here, the positive electrode active material particle 610 having a porous hollow structure include, as shown in FIG. 4, a shell section 612 formed of a lithium transition metal oxide, a hollow section 614 formed inside of the shell section 612, and a through-hole 616 penetrated through the shell section 612. Here, among an inside surface 612a of the shell section 612, a section corresponding to the through-hole 616 of the positive electrode active material particle 610 of the inside surface 612a of the shell section 612 is not contained in the inside surface 612a of the shell section 612. Further, the through-hole 616 is not contained in the hollow section 614 of the positive electrode active material particle 610. Thus, at least a part of the positive electrode active material particles 610 used in the lithium ion secondary battery 100 has, as shown in FIG. 4, a hollow structure having a distinct hollow section 614 (also referred to as "porous hollow structure"). Further, also porous positive electrode active material particles manufactured using a spray firing method (also called as spray drying method) can be included here in the hollow positive electrode active material particles 610.

Here, the "porous hollow positive electrode active material particle" indicates a positive electrode active material particle in which a ratio of the hollow section in an apparent cross-section area of the active material particle (particle porosity) is 5% or more. The particle porosity may be evaluated in a cross-section cut at a random position of a cross-sectional SEM image of the positive electrode active material layer 223, and a rough average value (arithmetic average value) of the positive electrode active material layer 223 may be used to evaluate. At this time, the hollow sections collected by some degree may well be evaluated. Further, when there is a plurality of hollow sections collected by some degree, a total of a plurality of the hollow sections may well be evaluated. Further, fine pores (voids) less than 5% in the apparent cross-section may be neglected. Thus, only by having voids in particles, the porous hollow positive electrode active material particles 610 are not satisfying. The porous hollow positive electrode active material particles 610 are distinctly different from, for example, porous particles which are manufactured by, for example, a spray firing method (also called as "a spray drying method") and have a plurality of fine pores (voids), in whether there are collected hollow sections 614 are present or not.

Preferably, in a sectional cross-sectional SEM image of the positive electrode active material layer 223, the positive electrode active material particles 610 may have relatively large hollow sections 614. In the shell section 612 forming the hollow section 614, a through-hole 616 is formed. In one preferable embodiment of such positive electrode active material particles 610, a ratio of the hollow sections 614 in the apparent sectional area of the positive electrode active material particles 610 is 15% or more, preferably 20% or more, and more preferably 23% or more. A ratio of the hollow sections 614 in the apparent cross-sectional area of the positive electrode active material particles 610 may be evaluated by average of the positive electrode active material layer 223.

When the positive electrode active material particles 610 having a porous hollow structure like this are used, in comparison with the case where, for example, solid particles (having no hollow section) are used, an apparent volume of the particles having the same weight become larger, that is, more voluminous. The porous hollow structure has a space (voids) inside of the positive electrode active material particle 610. Therefore, even when the positive electrode active material layer 223 has the nearly same density, a space (voids) outside the positive electrode active material particles 610 becomes narrower. In this case, in the positive electrode active material layer 223, even when a ratio of the conductive material particles 620 is the same degree, the conductive material particles 620 are present more closely outside the positive electrode active material particles 610. Further, also the binder that adheres between the positive electrode active material particles 610 can be reduced. Therefore, the conductivity in the positive electrode active material layer 223 is excellent, and the diffusivity of the electrolytic solution (lithium ions) in the positive electrode active material layer 223 is excellent. The output characteristics of the positive electrode active material layer 223 can be improved thereby.

More preferably, in an optional cross section of the positive electrode active material layer 223, a thickness k of the shell section 612 at an optional position of an inside surface of the shell section 612 is set to the shortest distance $T(k)$ from an optional position of an inside surface of the shell section 612 to an outside surface of the shell section 612. In this case, a thickness of the shell section 612 of the positive electrode active material particle 610 may be 3 $\mu$m or less, more preferably 2.2 $\mu$m or less as an average of the positive electrode active material layer 223. Thus, when the shell section 612 of the positive electrode active material particle 610 is such thin as 3 $\mu$m or less, a distance through which lithium ions diffuse in the shell section 612 (inside of the positive electrode active material particle 610) is short, the diffusivity of lithium ions is excellent, and a lithium ion secondary battery 100 having low resistance can be obtained thereby.. When the shell section 612 of the positive electrode active material particle 610 is such thin as 2.2 $\mu$m or less, the effect can be more remarkably obtained.

As the conductive material particles, for example, carbon materials such as carbon powder, carbon fiber, and the like can be used. One kind or two or more kinds selected from the conductive material particles like this may be used alone or in combinations thereof. As the carbon powder, carbon powders such as various carbon blacks (for example, acetylene black, oil furnace black, graphitized carbon black, carbon black, graphite, Ketjen black, channel black, and furnace black), graphite powders and the like may be used.

Here, a ratio of an average particle size C of the conductive material particles to, for example, an average particle size A of the positive electrode active material particles may be $(C/A)<0.1$, more preferably $(C/A)<0.5$, and $(C/A)<0.8$.

Further, the conductive material particles may be at least one kind of particles selected from carbon blacks such as acetylene black, Ketjen black, channel black, furnace black, and the like.

Next, the void supporting particles 630 are particles differentiated from the hollow positive electrode active material particles 610 described above, and ensure predetermined voids in the positive electrode active material layer 223.

Here, the void supporting particles 630 are particles that can provide voids necessary for the positive electrode active material layer 223. The ratio of an average particle size B of the void supporting particles 630 to, for example, the average particle size A of the hollow positive electrode active material particles 610 is $1/3 \leq B/A \leq 2$. The ratio is more preferably $2/3 \leq (B/A)$ and $B/A \leq 1.8$. Further, the crushing strength of the void supporting particles 630 may be, for example, 10 MPa or more. Here, a ratio of an average particle size of the void supporting particles 630 to an average particle size A of the hollow positive electrode active material particles 610 is 1/4 A or more.

Here, the "average particle size" means a measurement value (d50) based on a typical laser diffraction/scattering method. Various particle size distribution analyzers which are commercially available may be used for the laser diffraction/scattering method. Further, the "crushing strength" means the maximum stress load under which a single particle is crushed by brittle fracture during crushing of particles. A measurement method of such crushing strength (also can be called as "particle crushing strength") is conducted in such a manner that using a commercially available micro-compression tester (for example, MCT-W manufactured by Shimadzu Corporation), single powder particles (one kind of powder particles) are sprinkled on a stage of the micro-compression tester, and a crushing test is conducted. Then, while observing with an optical microscope, a stress-load curve when the particle is crushed is measured. The maximum load stress of the stress-load curve is obtained as the crushing strength. Here, as measurement conditions, an indenter diameter is set to $\phi 50 \ \mu m$, a load is set to 50 mN, and the indenter is moved so that a load speed of the indenter may be 2 mN/sec. While observing a situation of crushing of the particle on a monitor of an optical micrometer, the crushing strength was measured.

As such void supporting particles 630 for example, graphite particles having a particle density of 1.1 g/cm$^3$ or more may be used (not forming part of the present invention). As such graphite particles, for example, so-called spheroidal graphite may be used. Further, such graphite particles can provide a function as a conductive material that ensures electrical continuity between the positive electrode active material particles 610 and an electrical continuity between the positive electrode active material particles 610 and the positive electrode current collector foil 221.

In this case (not forming part of the present invention), a weight ratio of the graphite particles as the void supporting particles 630 in the positive electrode active material layer 223 may be, for example, about 2% by weight or more and 5% by weight or less, more preferably 2.2% by weight or more, still more preferably 2.5% by weight or more, and more preferably 4.8% by weight or less, still more preferably 4.5% by weight or less.

As the void supporting particles 630, solid positive electrode active material particles are used. As such solid positive electrode active material particles, materials that can be used as a positive electrode active material of a lithium ion secondary battery may be used. Examples of the solid positive electrode active material particles include particles of lithium transition metal oxides such as $LiNiCoMnO_2$ (lithium nickel cobalt manganese composite oxide), $LiNiO_2$ (lithium nickel oxide), $LiCoO_2$ (lithium cobalt oxide), $LiMn_2O_4$ (lithium manganate), $LiFePO_4$ (lithium iron phosphate) and the like. Here, $LiMn_2O_4$ has, for example, a spinel structure. Further, $LiNiO_2$ or $LiCoO_2$ has a layered rock salt structure. Still further, $LiFePO_4$ has, for example, an olivine structure. Further, $LiFePO_4$ having an olivine structure may be coated with a carbon film.

Thus, by the solid positive electrode active material particles having a function as the void supporting particles 630, necessary voids can be provided to the positive electrode active material layer 223. Further, the solid positive electrode active material particles serve as a positive electrode active material that releases lithium ions during charge. On the other hand, the hollow positive electrode active material particles 610 are superior to the void supporting particles 630 in a function for improving high output characteristics. Therefore, when the solid positive electrode active material particles are used as the void supporting particles 630, a necessary amount as the void supporting particles 630 may be added. The weight ratio of the solid positive electrode active material particles in the positive electrode active material layer 223 is set to about 2% by weight or more, preferably 3% by weight or more.

The solid positive electrode active material particles are be added by a necessary amount as the void supporting particles 630. A weight ratio of solid positive electrode active material particles in the positive electrode active material layer 223 is 50% by weight or less, preferably 40% by weight or less, more preferably 30% by weight or less. The solid positive electrode active material particles are being used as the void supporting particles 630 and a weigh ratio of the hollow positive electrode active material particles 610 in the positive electrode active material layer 223 may be 30% by weight or more, more preferably 50% by weight or more, still more preferably 70% by weight or more. Thus the necessary high output characteristics is obtained by maintaining a weight ratio of the hollow positive electrode active material particles 610 in the positive electrode active material layer 223 high. In the positive electrode active material layer 223, the weight ratio of the hollow positive electrode active material particles 610 is larger than that of the solid positive electrode active material particles.

Further, as the void supporting particles 630 the solid positive electrode active material particles are used in proper amounts. Further, since the void supporting particles may be particles capable of providing necessary voids in the positive electrode active material layer 223, particles that are stable in the battery and have an appropriate magnitude may be adopted. Further, such particles may be coated with carbon to provide conductivity.

Further, the binder adheres the respective particles of the positive electrode active material particles 610, the void supporting particles 630, and conductive material particles 620, which are contained in the positive electrode active material layer 223, or adhere these particles and the positive electrode current collector foil 221. As such binders, polymers that can be dissolved or dispersed in a solvent used may be used. For example, in a positive electrode mixture composition that uses an aqueous solvent, aqueous or water-dispersible polymers such as cellulose-based polymers (carboxymethylcellulose (CMC), hydroxypropyl methylcellulose (HPMC), and the like), fluororesins and so on may be preferably adopted. Further, in a positive electrode mixture composition that uses a nonaqueous solvent, polymers (polyvinylidene fluoride (PVDF), polyvinylidene chloride (PVDC), polyacrylonitrile (PAN), and the like) can be preferably adopted.

As was described above, the lithium ion secondary battery 100 includes, in the positive electrode active material layer 223, the hollow positive electrode active material particles 610, the conductive material particles 620, and the void supporting particles 630 differentiated from the hollow positive electrode active material particles 610 and the conductive material particles 620. Therefore, for example, in the press step, the hollow positive electrode active material particle 610 can be hindered from being crushed, and necessary voids can be provided to the positive electrode active material layer 223 thereby.

Here, the positive electrode active material layer 223 may have voids h of, for example, 20% or more by a volume ratio. A ratio of voids h in the positive electrode active material layer 223 may be set to, for example, 25% or more by a volume ratio.

Here, the "ratio of voids" is a ratio $(Vb/Va)$ of a volume $Vb$ of voids h formed in the positive electrode active material layer 223 and an apparent volume $Va$ of the positive electrode active material layer 223. That is, a ratio $A1$ $(Vb/Va)$ of voids h can be obtained, for example, by dividing a volume $Vb$ of the voids h contained in the positive electrode active material layer 223 by an apparent volume $Va$ of the positive electrode active material layer 223.

The apparent volume $Va$ of the positive electrode active material layer 223 can be obtained from, for example, as shown in FIG. 3, a product of an area $Sa1$ by planar view of a sample of a positive electrode sheet 220 and a thickness a of the positive electrode active material layer 223 $(Va=Sa1 \times d)$. In this case, the thickness a of the positive electrode active material layer 223 may be evaluated by measuring at a plurality of positions and by arithmetically averaging measured values. In FIG. 3, the positive electrode active material layer 223 formed on one surface of the positive electrode current collector 221 is shown. When the positive electrode active material layer 223 is formed on both surfaces of the positive electrode current collector 221, the thickness d of the positive electrode active material layer 223 can be obtained as a sum of the thicknesses d1 and d2 of the positive electrode active material layers 223 on both surfaces $(d=d1+d2)$.

Further, as another method, the thickness d of such a positive electrode active material layer 223 can be obtained as a difference $(ha-he)$ of a total thickness $ha$ of the positive electrode sheet 220 and a thickness $he$ of the positive electrode current collector 221 $(d=ha-he)$. Further, an area $Sa1$ by planar view of a sample of the positive electrode sheet 220 can be readily obtained, for example, by cutting out a sample of the positive electrode sheet 220 in square or in rectangle. Thus, when the area $Sa1$ by planar view of a sample of the positive electrode sheet 220 and the thickness d of the positive electrode active material layer 223 are obtained, the apparent volume $Va$ of the positive electrode active material layer 223 can be obtained.

The volume $Vb$ of the voids h formed in the positive electrode active material layer 223 can be measured using, for example, a mercury porosimeter. In the measurement method, a "void" means an externally opened void. A closed space of the positive electrode active material layer 223 is not contained in the "void" by the method. The mercury porosimeter is a device for measuring a pore distribution of porous bodies by a mercury penetration method. As the mercury porosimeter, for example, an Auto pore III9410 manufactured by Shimadzu Corporation can be used. When the mercury porosimeter is used, by measuring in the range of, for example, 4 psi to 60,000 psi, a volume distribution of voids h corresponding to a pore range of 10 μm to 0.01 μm can be obtained.

For example, a plurality of number of samples is cut out of the positive electrode sheet 220. Next, a volume of the voids h contained in the positive electrode active material layer 223 of each of the samples is measured using the mercury porosimeter. The mercury porosimeter is a device that measures a pore distribution of porous bodies by a mercury penetration method. In the mercury penetration method, at first, a sample of the positive electrode sheet 220 is dipped in mercury in an evacuated state. In this state, when a pressure applied on mercury becomes higher, mercury gradually infiltrates into smaller spaces. Therefore, based on a relationship between an amount of mercury infiltrated into the positive electrode active material layer 223 and a pressure applied on mercury, magnitudes of the voids h in the positive electrode active material layer 223 and a volume distribution thereof can be obtained. Using such a mercury penetration method, the volume Vb of the voids h contained in the positive electrode active material layer 223 can be obtained.

A ratio A1 (Vb/Va) of the voids h of the positive electrode active material layer 223 can be obtained as a ratio of the volume Vb of the voids h contained in the positive electrode active material layer 223, which is obtained as shown above, and the apparent volume Va of the positive electrode active material layer 223. The ratio A1 (Vb/Va) of the voids h obtained here shows a volume ratio of the voids h by which the electrolytic solution can infiltrate in the positive electrode active material layer 223.

There are various other methods for obtaining the ratio A (Vb/Va) of the voids h of the positive electrode active material layer 223. Hereinafter, other measurement methods are exemplified.

For example, the ratio A1 (Vb/Va) of the voids h of the positive electrode active material layer 223 can be obtained according to the following formula based on measurement values of the respective components measured before the positive electrode sheet 220 is prepared.

$$\text{Ratio A1 (Vb/Va) of voids h} = [(ha-he) - Mv \times \{(\alpha/X) + (\beta/Y) + (\gamma/Z)\}]/(ha-he)$$

That is, a formula showing the ratio A1 (Vb/Va) of the voids h of the positive electrode active material layer 223 is a ratio A1 (Vb/Va) of the voids h of the positive electrode active material layer 223 = [("the thickness ha of the positive electrode sheet 220"-"the thickness he of the positive electrode current collector 221")-"basis weights Mv of both surfaces of the positive electrode active material layer 223"×{(a weight ratio $\alpha$ of the positive electrode active material particles 610)/(a true density X of the positive electrode active material particles 610)+(a weight ratio $\beta$ of the conductive material particles 620)/(a true density Y of the conductive material particles 620)+(a weight ratio $\gamma$ of the binder)/(a true density Z of the binder)}]/("a thickness ha of the positive electrode sheet 220"-"a thickness he of the positive electrode current collector 221").

Here, the Mv×{($\alpha$/X)+($\beta$/Y)+($\gamma$/Z)} corresponds to a thickness of the positive electrode active material layer 223 when it is assumed that there is no void in the positive electrode active material layer 223.

Further, "a weight ratio $\alpha$ of the positive electrode active material particles 610". "a true density X of the conductive material particles 610", "a weight ratio $\beta$ of the conductive material particles 620". "a true density Y of the conductive material particles 620". "a weight ratio $\gamma$ of the blinder)", and "a true density Z of the binder" can be measured, for example, before the positive electrode active material layer 223 is formed. The "true density" can be measured using a density measurement device, for example, a gas substitution type picnometer.

Further, "a thickness d of the positive electrode active material layer 223" and "a basis weight Mv of the positive electrode active material layer 223" can be measured, for example, after the positive electrode active material layer 223 has been formed. Further, "a thickness d of the positive electrode active material layer 223" and "a basis weight Mv of the positive electrode active material layer 223" can be set also as a target value during a coating step and a rolling step of the positive electrode active material layer 223.

Still further, when the positive electrode active material layer 223 is formed on both surfaces of the positive electrode current collector 221, by taking into consideration that the positive electrode active material layer 223 is formed on both surfaces of the positive electrode current collector 221, the ratio A1 of the voids h of the positive electrode active material layer 223 may be calculated.

The ratio A1 (Vb/Va) of the voids h of the positive electrode active material layer 223 can be approximated using a further different method. Hereinafter, another measurement method of the ratio A1 (Vb/Va) of the voids h will be described.

A sample of a cross section surface of the positive electrode active material layer 223 can be obtained using, for example, a cross-sectional SEM image. The cross-sectional SEM image is a cross-sectional photograph obtained using an electron microscope. For example, an optional cross-section of the positive electrode sheet 220 is obtained by a cross section polisher treatment (CP treatment). As an electron microscope, for example, a scanning electron microscope (FE-SEM)HITACHIS-4500 manufactured by Hitachi High-Technologies Corporation can be used. According to such a cross section SEM image of the positive electrode active material layer 223, based on difference of color tone and gradation, voids h formed on a cross-section of a constituent material of the positive electrode active material layer 223 and inside of the positive electrode active material layer 223 can be determined. Such a determination may be performed by image treatment technique.

The ratio A1 (Vb/Va) of the voids h can be approximated in, for example, a sample of a cross section surface of the positive electrode active material layer 223, by a ratio (Sb/Sa) of an area Sb of the voids h contained per unit cross section area of the positive electrode active material layer 223 and an apparent cross section area Sa of the positive electrode active material layer 223. In this case, it is good to obtain the ratio (Sb/Sa) from a plurality of samples of cross-section surfaces of the positive electrode active material layer 223. Further, such a ratio (Sb/Sa) can be approximated, for example, in a cross section SEM image, by a ratio (Db/Da) of the number of pixels Db contained in a region determined to be voids h of the positive electrode active material layer 223 and the number of pixels Da in a region of the positive electrode active material layer 223.

In this case, the larger the number of samples of cross-section surface of the positive electrode active material layer 223 is, the more accurately the ratio (Sb/Sa) can approximate the ratio (Vb/Va) of the voids h. In this case, for example, along optional one direction of the positive electrode sheet 220, samples of cross-section surface may be taken from a plurality of cross-section surfaces orthogonal to the one direction.

Hereinafter, various samples of the lithium ion secondary battery 100 were prepared, and an effect when the hollow positive electrode active material particles 610 were adopted as the positive electrode active material particles 610 of the positive electrode active material layer 223 (see FIG. 3) and the void supporting particles 630 were added was evaluated.

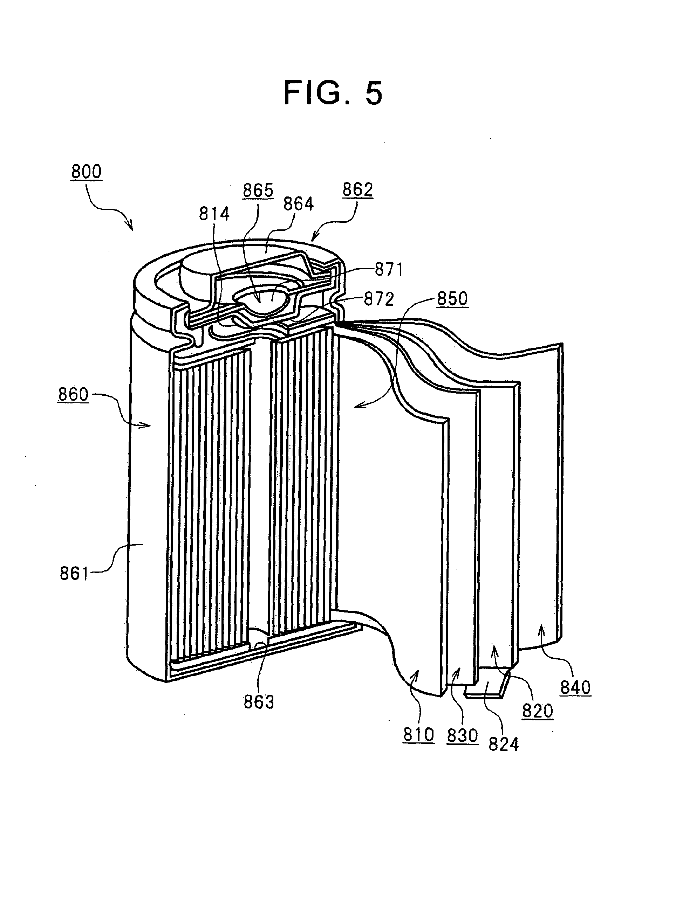

FIG. 5 schematically shows a battery 800 for evaluation test. Here, a cylindrical (18650) lithium ion secondary battery was prepared for evaluation test. The battery 800 for evaluation test includes, as shown in FIG. 5, a wound electrode body 850 in which separators 830, 840 are interposed between a positive electrode sheet 810 and a negative electrode sheet 820. Such a wound electrode body 850 is housed in an exterior case 860 together with a nonaqueous electrolytic solution (not shown). The respective samples are different in a structure of the positive electrode sheet 810 and are common in a negative electrode sheet 820, separators 830. 840, a nonaqueous electrolytic solution, and a rating capacity of the battery.

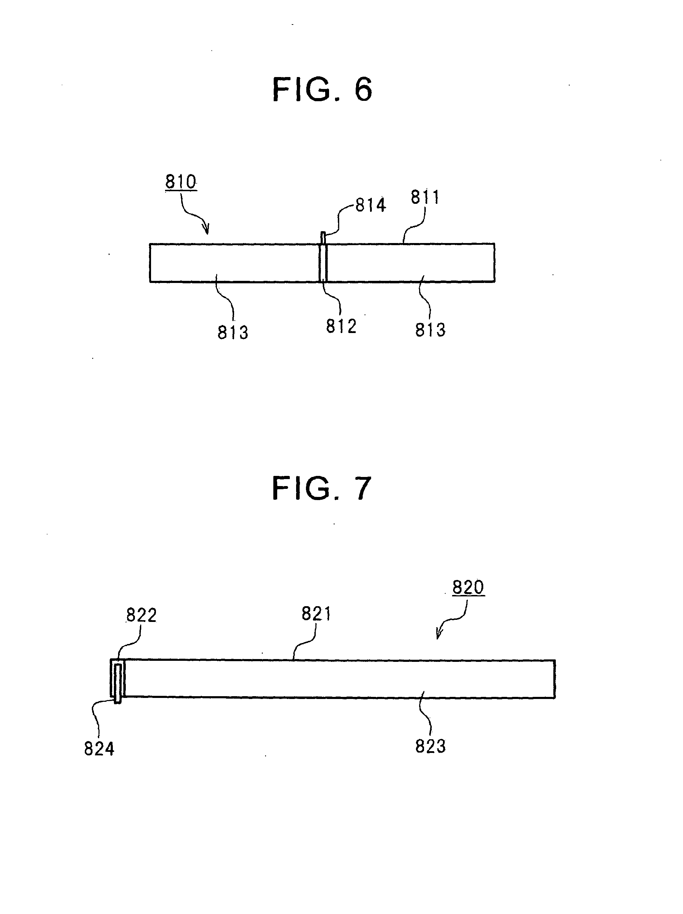

FIG. 6 is a developed view obtained by developing the positive electrode sheet 810. The positive electrode sheet 810 has, as shown in FIG. 6, an uncoated section 812 having a predetermined width in a center part of a length direction of a belt-like current collector foil 811. On both sides of such an uncoated section 812, the positive electrode active material layer 813 is coated on both surfaces of the current collector foil 811. Further, an electrode terminal 814 (internal terminal) is attached to the uncoated section 812. As the current collector foil 811 of the positive electrode sheet 810, an aluminum foil having a thickness of 15 nm is used. Further, the positive electrode sheet 810 is set to a width of 54 mm and a length of 800 mm. Still further, a thickness of the positive electrode layer is set to 65 $\mu$m.

FIG. 7 is a developed view obtained by developing the negative electrode sheet 820. The negative electrode sheet 820 has, as shown in FIG. 7, the uncoated section 822 having a predetermined width at one end section in a length direction of the belt-like current collector foil 821. The negative electrode active material layer 823 is coated on both surfaces of the current collector foil 821 except the uncoated section 822. Further, an electrode terminal 824 (internal terminal) is attached to the uncoated section 822. As the current collector foil 821 of the negative electrode sheet 820, a copper foil having a thickness of 10 nm is used. Still further, the negative electrode sheet 820 was set to a width of 56 mm and a length of 900 mm. A thickness of the negative electrode active material layer was set to 80 $\mu$m.

The negative electrode active material layer 823 (see FIG. 7) includes negative electrode active material particles, a binder, and a thickener. Here, as the negative electrode active material particles, graphite particles are used. As the binder, styrene/butadiene rubber (SBR) is used. As the thickener, carboxymethylcellulose (CMC) is used. A mixing ratio of the negative electrode active material particles, the binder, and the thickener was set to a ratio of negative electrode active material particles: binder: thickener = 100: 1: 1 by a solid content ratio (%).

The positive electrode sheet 810 and the negative electrode sheet 820 are superposed with the separators 830, 840 interposed therebetween, and wound cylindrically to form a wound electrode body 850. At one end in a winding axis direction of the wound electrode body 850, an electrode terminal 814 of the positive electrode extends, and at the other end the electrode terminal 824 of the negative electrode extends. Here, as the separators 830, 840, a porous film having a three-layer structure of PP/PE/PP is used. The separators 830, 840 have a width of 60 mm, a thickness of 24 $\mu$m, and a length enough to be interposed between the positive electrode sheet 810 and the negative electrode sheet 820.

The exterior case 860 includes a bottomed cylindrical container 861 and a cap 862. The wound electrode body 850 is housed in such bottomed cylindrical container 861. And, the electrode terminal 824 of the negative electrode is electrically connected to a negative electrode terminal 863 (external terminal) disposed to the container 861. The positive electrode terminal 864 (external terminal) is disposed to the outside of the cap 862, and a current interrupt device 865 is disposed to the inside thereof in a state of being electrically connected to the positive electrode terminal 864 (external terminal). The current interrupt device 865 includes an inversion plate 871 that inverts when a pressure within the container 861 becomes higher, and a current interrupt plate 872 that is broken as the inversion plate 871 inverts. The electrode terminal 814 of the positive electrode of the wound electrode body 850 is electrically connected to the current interrupt plate 872 of the current interrupt device 865.

In the exterior case 860, an electrolytic solution is housed together with the wound electrode body 850. Here, as the electrolytic solution, in a nonaqueous electrolytic solution where in a mixed solvent containing ethylene carbonate (EC), dimethyl carbonate (DMC), and ethyl methyl carbonate (EMC) at a volume ratio of EC: DMC: EMC = 3: 3: 4, $LiPF_6$ is dissolved at a concentration of 1 mol/L, the above-described gas generating agent (an additive agent that generates gas during overcharging) is added. An addition amount of the gas generating agent was set to 4% by volume with respect to the electrolytic solution. As the gas generating agent, cyclohexylbenzene (CHB) and biphenyl (BP) were selected and used in each sample.

Hereinafter, a plurality of samples of the battery 800 for evaluation test will be described. In the respective samples of the battery 800 for evaluation test, a structure of the positive electrode active material layer 813 (see FIG. 6) and a kind of the gas generating agent added to the electrolytic solution were changed. Hereinafter, a sample 1 will be described, and other samples will be described of points different from the sample 1.

In the sample 1, the positive electrode active material layer 813 (see FIG. 6) includes hollow positive electrode active material particles, conductive material particles, void supporting particles, and a binder.

Here, a composition formula of a composite oxide used as the hollow positive electrode active material particles is as shown below: $Li_{1.07}Ni_{0.34}Co_{0.33}Mn_{0.33}O_2$. Here, an average particle size of the hollow positive electrode active material particles was 5.2 $\mu$m. As the conductive material particles, acetylene black (AB) having an average particle size of 300 nm and the crushing strength of less than 1 MPa was used. As the void supporting particles, solid graphite particles having an average particle size of 5 $\mu$m and the crushing strength of 20 MPa were used. As the binder of the positive electrode active material layer 813, polyvinylidene fluoride (PVDF) was used. A mixing ratio (weight ratio) of the positive electrode active material layer 813 was set to hollow positive electrode active material particles: conductive material particles (acetylene black): void supporting particles (graphite particles): binder (polyvinylidene fluoride (PVDF)) = 90% by weight: 3% by weight: 3% by weight: 4% by weight.

Further, in a mixture paste (positive electrode paste) prepared when the positive electrode active material layer 813 is formed, N-methyl-2-pyrrolidone (NMP) was used as a solvent. Here, such positive electrode paste was coated on both surfaces of the positive electrode current collector 811 and dried, and the positive electrode active material layer 813 was obtained thereby. At this time, the positive electrode paste was coated so that basis weight on both surfaces after drying (except NMP) may be 28.6 mg/cm$^2$. Further, after drying, a thickness (density) of the positive electrode active material layer 813 was adjusted by roller press.

In the sample 1 (not forming part of the present invention), a pore diameter of an electrode plate of the positive electrode sheet 810 was 0.56 $\mu$m. Further, as the gas generating agent added to the electrolytic solution, cyclohexylbenzene (CHB) was used.

Here, a pore diameter of electrode plate of the positive electrode sheet 810 means a pore diameter showing the maximum frequency in a pore diameter distribution of micropores (voids) present in the positive electrode sheet 810 after the press step. When a pore diameter of the electrode plate of the positive electrode sheet 810 is measured, using a porosimeter (here, Autopore IV 9500 manufactured by Shimadzu Corporation), by mercury penetration, a pore diameter distribution between 0.01 to 10 $\mu$m in the electrode plate was measured, and a pore diameter at the maximum frequency thereof was obtained as a pore diameter of the electrode plate.

In the sample 2 (not forming part of the present invention), solid graphite particles having an average particle size of 3.0 $\mu$m and the crushing strength of 10 MPa were used as the void supporting particles. Further, a mixing ratio (weight ratio) of the positive electrode active material layer 813 was set to hollow positive electrode active material particles: conductive material particles (acetylene black): void supporting particles (graphite particles): binder (polyvinylidene fluoride (PVDF)) = 90% by weight: 5% by weight: 1% by weight: 4% by weight. Other constitutions were the same as the sample 1. In this case, the pore diameter of the electrode plate of the positive electrode active material layer 813 was 0.50 $\mu$m.

In sample 3 (not forming part of the present invention), hollow positive electrode active material particles having an average particle size of 5.8 $\mu$m were used as the hollow positive electrode active material particles. Other constitutions were set the same as sample 1. In this case, a pore diameter of the electrode plate was 0.57 $\mu$m.

In sample 4 (not forming part of the present invention), hollow positive electrode active material particles having an average particle size of 3.9 $\mu$m were used as the hollow positive electrode active material particles. Further, solid graphite particles having an average particle size of 8 $\mu$m and the crushing strength of 28 MPa were used as the void supporting particles. Other constitutions were set the same as sample 1. In this case, a pore diameter of the electrode plate was 0.52 $\mu$m.

In sample 5 (not forming part of the present invention), hollow positive electrode active material particles having an average particle size of 5.8 $\mu$m were used as the hollow positive electrode active material particles. Further, solid graphite particles having an average particle size of 12 $\mu$m and the crushing strength of 33 MPa were used as the void supporting particles. Other constitutions were set the same as sample 1. In this case, a pore diameter of the electrode plate was 0.59 $\mu$m.

In sample 6 (not forming part of the present invention), hollow positive electrode active material particles having an average particle size of 5.2 μm were used as the hollow positive electrode active material particles. Further, solid graphite particles having an average particle size of 12 μm and the crushing strength of 33 MPa were used as the void supporting particles. Other constitutions were set the same as sample 1. In this case, a pore diameter of the electrode plate was 0.56 μm.

In sample 7 (not forming part of the present invention), as the gas generating agent added to the electrolytic solution, biphenyl (BP) was used. Other constitutions were set the same as sample 1.

In comparative sample 8, hollow positive electrode active material particles having an average particle size of 5.2 μm were used as the hollow positive electrode active material particles. Further, without using the void supporting particles, a mixing ratio (weight ratio) of the positive electrode active material layer 813 was set to hollow positive electrode active material particles: conductive material particles (acetylene black): binder (polyvinylidene fluoride (PVDF)) = 90% by weight: 6% by weight: 4% by weight. Other constitutions were set the same as the sample 1. In this case, a pore diameter of the electrode plate of the positive electrode active material layer 813 was 0.48 μm.

In comparative sample 9, hollow positive electrode active material particles having an average particle size of 4.1 μm were used as the hollow positive electrode active material particles. Further, without using the void supporting particles, a mixing ratio (weight ratio) of the positive electrode active material layer 813 was set to hollow positive electrode active material particles: conductive material particles (acetylene black): binder (polyvinylidene fluoride (PVDF)) = 90% by weight: 6% by weight: 4% by weight. Other constitutions were set the same as the sample 1. In this case, the pore diameter of the electrode plate of the positive electrode active material layer 813 was 0.44 μm.

In comparative sample 10, hollow positive electrode active material particles having an average particle size of 6.2 μm were used as the hollow positive electrode active material particles. Further, without using the void supporting particles, a mixing ratio (weight ratio) of the positive electrode active material layer 813 was set to hollow positive electrode active material particles: conductive material particles (acetylene black): binder (polyvinylidene fluoride (PVDF)) = 90% by weight: 6% by weight: 4% by weight. Other constitutions were set the same as the sample 1. In this case, the pore diameter of the electrode plate of the positive electrode active material layer 813 was 0.49 μm.

In sample 11 (not forming part of the present invention), hollow positive electrode active material particles having an average particle size of 5.8 μm were used as the hollow positive electrode active material particles. Further, solid graphite particles having an average particle size of 5 μm and the crushing strength of 20 MPa were used as the void supporting particles. Further, a mixing ratio (weight ratio) of the positive electrode active material layer 813 was set to hollow positive electrode active material particles: conductive material particles (acetylene black): void supporting particles (graphite particles): binder (polyvinylidene fluoride (PVDF)) = 90% by weight: 2% by weight: 4% by weight: 4% by weight. Other constitutions were set the same as the sample 1. In this case, the pore diameter of the electrode plate of the positive electrode active material layer 813 was 0.58 μm.

High output characteristics and proper operation of the current interrupt device of the battery 800 for evaluation test were evaluated according to an IV resistance as the output characteristics and an amount of generated gas during overcharge.

Hereinafter, about the battery 800 for evaluation test, a conditioning step, measurement of a battery capacity, SOC control, measurement of an IV resistance, and measurement of an amount of generated gas during overcharge will be sequentially described.

Next, about a battery for evaluation test structured as described above, a conditioning step, measurement of a battery capacity, SOC control, measurement of an IV resistance, and measurement of an amount of generated gas during overcharge will be sequentially described. Here, the conditioning step was carried out according to the following procedures 1 to 5. In the procedure 1, charge was conducted for 2 hrs at a constant current of 0.2C, followed by 10 minutes rest. In the procedure 2. discharge was conducted for 2 hrs at a constant current of 0.2C, followed by 10 minutes rest. In the procedure 3, charge was conducted up to 4.1 V at a constant current of 0.2 C, and 10 minutes rest was taken after reaching 4.1 V. In the procedure 4, discharge was conducted up to 3.0 V at a constant current of 0.2 C, and 10 minutes rest was taken after reaching 3.0 V. In the procedure 5, the procedures 3, 4 were repeated two more times.

Next, a rating capacity of a battery for evaluation test was measured, after the above-described conditioning step, according to the following procedures 1 to 3, at 25°C, in a voltage range of 3.0 V to 4.1 V. In the procedure 1, discharge by constant current at 0.2 A was conducted; after reaching 3.0 V, discharge was conducted by constant voltage for 2 hrs; and after that, 10 seconds rest is taken. In the procedure 2, after the procedure 1, charge by constant current at 0.2 A was conducted; after reaching 4.1 V, continue charge while decreasing a current for a time to be a constant voltage at 4.1 V was conducted; and charge was finished when a current became 50 mA (C/5 constant current and constant voltage charge). After the charge, 20 minutes rest was taken. In the procedure 3, after the procedure 2, discharge up to 3.0 V by constant current at 0.2 A was conducted. Here, a discharge capacity (C/5 constant current discharge) in the constant current discharge in the procedure 3 was taken as a battery capacity (battery rating capacity). Here, a battery capacity (battery rating capacity) of the battery 800 for evaluation test was set to 1 Ah.

The SOC control of the battery 800 for evaluation was performed by controlling the battery for evaluation test prepared above according to the following procedures 1 and 2 under a temperature environment of 25°C. Here, the SOC control may be conducted, for example, after the conditioning step and measurement a rating capacity. In the procedure 1, charge at constant current of 1 C from 3 V to a state of charge of about 60% of a rating capacity (SOC 60%) was conducted. Here. "SOC" means State of Charge. In the procedure 2, after the procedure 1, charge at a constant voltage for 2.5 hours was conducted. The battery 800 for evaluation test can be controlled to a predetermined state of charge thereby.

Further, in order to evaluate the output characteristics of the battery 800 for evaluation test, the IV resistance was measured here. The IV resistance was calculated according to the following procedure. In the procedure 1, a state of charge of SOC 60% (here, 3.73 V as a cell voltage) was set by an SOC control. In the procedure 2, after the procedure 1, a discharging treatment was performed for 10 sec by energizing a pulse current of 10 A (corresponding to 10C). Here, a current value measured by the procedure 2 was divided with a voltage drop value $\Delta V$ that was a value obtained by subtracting a voltage value at a time point of 10 sec from an initial voltage value (3.73 V) in the procedure 2. The value was obtained as a value of IV resistance value.

In order to evaluate an amount of generated gas by overcharge of the battery 800 for evaluation test, a group of electrode plates the same as those used in a cylindrical battery (a laminate of a positive electrode sheet 810, a negative electrode sheet 820, and separators 830, 840) was charged in a laminate bag together with an electrolytic solution in which a gas generating agent is added. And, a vacuum sealed, laminate cell was prepared thereby. Such a laminate cell was subjected to a conditioning step. Then, the prepared laminate cell was charged at a constant current of 1 A (corresponding to 1 C), for 1h and 40 minutes in a test bath which contains water of 60°C, and an overcharged state of SOC 140% was obtained. An amount of generated gas after overcharge was obtained from a volume change of the laminate cell before and after the overcharging treatment. The volume change of the laminate cell before and after the overcharging treatment was obtained as an amount of generated overcharge gas by measuring a volume change of the laminate cell from a weight change in water of the laminate cell based on the Archimedes method.

The volume change $\Delta V$ of the laminate cell is obtained by the following formula. $\Delta V = \rho w \times (W-W1)$, here, $\rho$ indicates a density of water, W is a weight in water of the laminate cell before overcharge, and W1 is a weight in water of the laminate cell after overcharge.

Results of the test of the each of samples (not forming part of the present invention) and comparative samples are shown in Tables 1 and 2. These are tables in which structures and evaluations of the each of samples and comparative samples are summarized. Here, a ratio of voids (porosity) of the positive electrode active material layer of each sample was set to 30%.

Table 1

| | Particle size of active material ($\mu$m) | Conductive material | Amount of conductive material % by weight | Void supporting particle | Amount of void supporting particle % by weight |
|---|---|---|---|---|---|
| Sample 1* | 5.2 | AB | 3 | KS 5 $\mu$m | 3 |
| Sample 2* | 5.2 | AB | 5 | KS 3 $\mu$m | 1 |
| Sample 3* | 5.8 | AB | 3 | KS 5 $\mu$m | 3 |
| Sample 4* | 3.9 | AB | 3 | KS 8 $\mu$m | 3 |
| Sample 5* | 5.8 | AB | 3 | KS 12 $\mu$m | 3 |
| Sample 6* | 5.2 | AB | 3 | KS 12 $\mu$m | 3 |
| Sample 7* | 5.2 | AB | 3 | KS 5 $\mu$m | 3 |
| Comparative Sample 8 | 5.2 | AB | 6 | - | - |
| Comparative Sample 9 | 4.1 | AB | 6 | - | - |
| Comparative Sample 10 | 6.2 | AB | 6 | - | - |
| Sample 11* | 5.8 | AB | 2 | KS 5 $\mu$m | 4 |

Table 2

|  | Additive agent | Pore diameter of electrode plate μm | Output characteristics IV resistance value mΩ | Amount of generated gas mL/Ah | CID operation |
|---|---|---|---|---|---|
| Sample 1* | CHB 1% | 0.56 | 42.2 | 41.4 | O |
| Sample 2* | CHB 1% | 0.50 | 46.6 | 48.7 | O |
| Sample 3* | CHB 1% | 0.57 | 45.9 | 46.4 | O |
| Sample 4* | CHB 1% | 0.52 | 40.2 | 34.4 | O |
| Sample 5* | CHB 1% | 0.59 | 46.3 | 45.6 | O |
| Sample 6* | CHB 1% | 0.56 | 43.6 | 40.3 | O |
| Sample 7* | BP 1% | 0.56 | 44.3 | 40.6 | O |
| Comparative Sample 8 | CHB 1% | 0.48 | 40.4 | 13.3 | X |
| Comparative Sample 9 | CHB 1% | 0.44 | 39.2 | 15.2 | X |
| Comparative Sample 10 | CHB 1% | 0.49 | 47.9 | 31.5 | O |
| Sample 11* | CHB 1% | 0.58 | 48.5 | 47.5 | O |
| * not forming part of the present invention | | | | | |

As a result, samples 1* to 8* and comparative sample 9 maintained the IV resistance relatively low, and high output characteristics could be provided at a high level. On the contrary, comparative sample 10 and sample 11 had relatively high IV resistance and low output characteristics. Further, samples 1 to 7 and 11 and comparative sample 10 had a large amount of generated gas, which can properly operate the current interrupt device (relatively earlier). By contrast, comparative samples 8 and 9 had a reduced amount of generated gas and were delayed in operation of the current interrupt device compared with other samples. Further, an amount of generated gas was in rough correlationship with the pore diameter of the electrode plate. That is, there was a tendency that in samples having a larger pore diameter of the electrode plate, an amount of generated gas was abundant, and in comparative samples having a smaller pore diameter of electrode plate, an amount of generated gas was slight.

As shown in such tests, when the positive electrode active material layer 813 properly includes the void supporting particles mainly for ensuring voids, and conductive material particles mainly for ensuring conductivity, there is a tendency that an amount of generated gas can be made larger while maintaining the output characteristics high, and the current interrupt device can be properly operated thereby.

As was variously described above, the secondary battery 100 proposed here includes, for example, as shown in FIG. 1, the battery case 300, the wound electrode body 200 (electrode body), the internal terminal 420 (the positive electrode terminal 420), the nonaqueous electrolytic solution (not shown), and the current interrupt device 460. Here, the wound electrode body 200 is housed in the battery case 300, and the internal terminal 420 is connected to the wound electrode body 200. The nonaqueous electrolytic solution is housed in the battery case 300 and contains the gas generating agent. When the internal pressure of the battery case becomes higher than predetermined pressure, in the current interrupt device 460, electrical connection between the wound electrode body 200 and the internal terminal 420 is interrupted.

The wound electrode body 200 includes the positive electrode current collector foil 221 (positive electrode current collector) and the positive electrode active material layer 223 formed on the current collector foil 221. The positive electrode active material layer 223 includes, as shown in FIG. 3, a plurality of the hollow positive electrode active material particles 610, a plurality of conductive material particles 620, and a, plurality of void supporting particles 630. Here, the void supporting particles 630 are particles that are distinguished from the hollow positive electrode active material particles 610 and provide predetermined voids h in the positive electrode active material layer 223. The conductive material particles 620 are particles that are distinguished from the void supporting particles 630 and provide electrical continuity of the positive electrode active material layer 223. Here, the positive electrode active material layer 223 may have voids h having the pore diameter of the electrode plate of 0.5 μm or more. Further, a ratio (B/A) of an average particle size B of the void supporting particles to an average particle size A of the hollow positive electrode active material particles is $1/3 \leq (B/A) \leq 2$, and the crushing strength of the void supporting particles may be larger than that of the conductive material particles.

As a result, in the positive electrode active material layer, voids can be properly provided, an amount of gas generated by the gas generating agent can be properly provided, an amount of generated gas can be made abundant while maintaining the output characteristics of such secondary battery high, and the current interrupt device can be properly operated.

Here, the positive electrode active material layer 223, in order to ensure an abundant amount of generated gas, may have voids of which pore diameter of the electrode plate is about 0.5 $\mu$m or more. In the viewpoint of ensuring an abundant amount of generated gas, a pore diameter of electrode plate of the positive electrode active material layer 223 may have voids h of about 0.5 $\mu$m or more, may be, for example, about 0.6 $\mu$m or more, for example, about 0.7 $\mu$m or more. The positive electrode active material layer 223 may have voids having a pore diameter of electrode plate, for example, of about 0.5 $\mu$m or more and about 0.7 $\mu$m or less.

Further, the crushing strength of the void supporting particles 630 may be, for example, 10 MPa or more. Still further, a ratio of the voids h of the positive electrode active material layer 223 may be, for example, 20% or more.

The solid positive electrode active material particles are used as the void supporting particles 630 and the weight ratio of the solid positive electrode active material particles as the void supporting particles 630 in the positive electrode active material layer 223 is 2% by weight or more and 50% by weight or less; for example, about 2% by weight or more and 10% by weight or less. Further, a weight ratio of the solid positive electrode active material particles 610 in the positive electrode active material layer 223 may be, for example, 30% by weight or more.

Further, an average particle size C of the conductive material particles 620 with respect to, for example, an average particle size A of the positive electrode active material particles 610 may be (C/A)<0.1. This allows maintaining high conductivity of the positive electrode active material layer 223, and also allows maintaining good output characteristics at a high rate. In this case, the conductive material particles 620 may be particles of at least one kind selected from carbon blacks such as acetylene black, Ketjen black, channel black, furnace black, and the like.

Further, the hollow positive electrode active material particles 610 may have, for example, as shown in FIG. 4, the shell section 612 formed of a lithium transition metal oxide, the hollow section 614 formed inside of the shell section 612, and the through-hole 616 formed penetrated through the shell section 612. By using such hollow positive electrode active material particles 610, in particular, the output characteristics at a high rate can be obtained at a high level.

In the above, the secondary battery proposed here has been variously described. However, the invention is not limited to any of the above-described secondary batteries unless otherwise stated clearly.

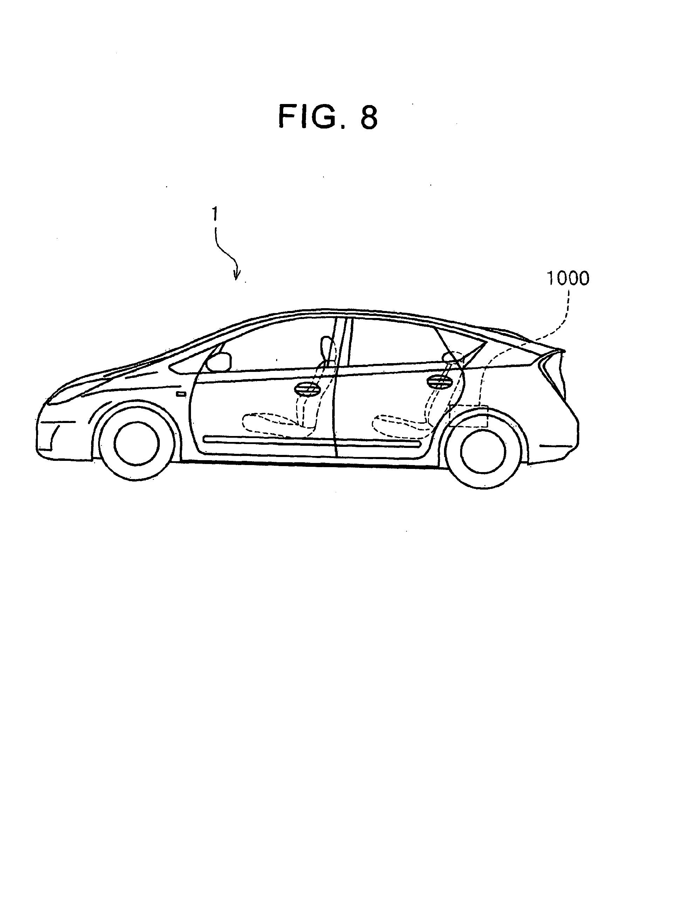

For example, the secondary battery proposed here, as was described above, can maintain the output characteristics at a high rate high and is appropriate in an amount of generated gas that operates the current interrupt device. As the electrode body of the secondary battery, the wound electrode body was exemplified. However, also a so-called laminate electrode body in which a positive electrode sheet and a negative electrode sheet are alternately laminated with a separator interposed therebetween may be used. Further, the secondary battery proposed here is appropriate in an amount of generated gas that operates the current interrupt device while maintaining the output characteristics at a high rate high. Therefore, the secondary battery proposed here is suitable as a battery for vehicle mounting use in automobile application where, in particular, high rate characteristics and safety assurance are required at a high level. In this case, for example, as shown in FIG. 8, in a form of a battery pack where a plurality of secondary batteries is connected, the secondary batteries can be preferably used as a vehicle-driving battery 1000 that drives a motor (electric motor) of a vehicle 1 such as an automobile.

Further, here, the lithium ion secondary battery was exemplified. However, the secondary battery proposed here, unless particularly clearly limited, can be adopted also in structure of a secondary battery other than the lithium ion secondary battery.

**Claims**

1. A secondary battery (100; 800) comprising:

   a battery case (300; 860);
   an electrode body (200; 850) that is provided with a positive electrode current collector (221; 811) and a positive electrode active material layer (223; 813) held on the positive electrode current collector, and is housed in the battery case;
   a terminal (420; 864) disposed to the battery case and connected to the electrode body;
   a nonaqueous electrolytic solution that is housed in the battery case, and contains a gas generating agent, the gas generating agent generating a gas by reacting at a voltage higher than a predetermined voltage; and

EP 2 862 219 B1

a current interrupt device (460; 865) that is configured to interrupt an electrical connection between the electrode body and the terminal when an internal pressure of the battery case becomes higher than a predetermined pressure,

the secondary battery **characterized in that**:

the positive electrode active material layer includes a plurality of hollow positive electrode active material particles (610), a plurality of void supporting particles (630), and a plurality of conductive material particles (620);

the void supporting particles are configured to provide voids (h) having a pore diameter of 0.5 $\mu$m or more in the positive electrode active material layer;

the conductive material particles are configured to provide an electrical continuity of the positive electrode active material layer;

a ratio of an average particle size of the void supporting particles to an average particle size of the hollow positive electrode active material particles is 1/3 or more and 2 or less;

a crushing strength of the void supporting particles is larger than a crushing strength of the conductive material particles;

the void supporting particles are solid positive electrode active material particles;

a weight ratio of the solid positive electrode active material particles in the positive electrode active material layer is 2% by weight or more and 50% by weight or less; and

a weight ratio of the hollow positive electrode active material particles in the positive electrode active material layer is larger than the weight ratio of the solid positive electrode active material particles.

2. The secondary battery according to claim 1, wherein the void supporting particles contain graphite particles having a particle density of 1.1 g/cm$^3$ or more.

3. The secondary battery according to claim 2, wherein a weight ratio of the graphite particles in the positive electrode active material layer is 2% by weight or more and 5% by weight or less.

4. The secondary battery according to any one of claims 1 to 3, wherein the crushing strength of the void supporting particles is 10 MPa or more.

5. The secondary battery according to any one of claims 1 to 4, wherein a ratio of voids of the positive electrode active material layer is 20% or more.

6. The secondary battery according to any one of claims 1 to 5, wherein a ratio of an average particle size of the conductive material particles to the average particle size of the hollow positive electrode active material particles is less than 0.1.

7. The secondary battery according to any one of claims 1 to 6, wherein the conductive material particle is at least one kind of particle selected from carbon blacks.

8. The secondary battery according to any one of claims 1 to 7, wherein each of the hollow positive electrode active material particles includes a shell section formed of a lithium transition metal oxide, a hollow section formed inside of the shell section, and a through-hole that penetrates through the shell section.

9. The secondary battery according to claim 8, wherein a ratio of the hollow section in a cross section of each of the hollow positive electrode active material particles is 5% or more.

**Patentansprüche**

1. Sekundärbatterie (100; 800), die umfasst:

ein Batteriegehäuse (300; 860);
einen Elektrodenkörper (200; 850), der mit einem Positivelektrodenstromabnehmer (221; 811) und einer Positivelektrodenaktivmaterialschicht (223; 813), die auf dem Positivelektrodenstromabnehmer gehalten wird, bereitgestellt ist und in dem Batteriegehäuse eingehaust ist;
einen Anschluss (420; 864), der zu dem Batteriegehäuse angeordnet ist und mit dem Elektrodenkörper verbunden ist;

eine nicht-wässrige Elektrolytlösung, die in dem Batteriegehäuse eingehaust ist und ein Gas-erzeugendes Element enthält, wobei das Gaserzeugende Element ein Gas durch das Reagieren bei einer Spannung erzeugt, die höher als eine bestimmte Spannung ist; und

eine Stromunterbrechungsvorrichtung (460; 865), die konfiguriert ist, um eine elektrische Verbindung zwischen dem Elektrodenkörper und dem Anschluss zu unterbrechen, wenn ein innerer Druck des Batteriegehäuses höher als ein bestimmter Druck wird,

wobei die Sekundärbatterie **dadurch gekennzeichnet ist, dass**:

die Positivelektrodenaktivmaterialschicht eine Mehrzahl an hohlen Positivelektrodenaktivmaterialteilchen (610), eine Mehrzahl an Hohlraum-fördernden Teilchen (630) und eine Mehrzahl an elektrisch leitfähiges Material-Teilchen (620) beinhaltet;

wobei die Hohlraum-fördernden Teilchen konfiguriert sind, um Hohlräume (h) mit einem Porendurchmesser von 0,5 μm oder mehr in der Positivelektrodenaktivmaterialschicht bereitzustellen;

wobei die leitfähiges Material-Teilchen konfiguriert sind, dass sie eine elektrische Kontinuität der Positivelektrodenaktivmaterialschicht bereitstellt;

wobei ein Verhältnis einer mittleren Teilchengröße der Hohlraum-fördernden Teilchen zu einer mittleren Teilchengröße der hohlen Positivelektrodenaktivmaterialteilchen 1/3 oder mehr und 2 oder weniger ist;

wobei eine Druckfestigkeit der Hohlraum-fördernden Teilchen größer als eine Druckfestigkeit der leitfähiges Material-Teilchen ist;

wobei die Hohlraum-fördernden Teilchen Feststoffpositivelektrodenaktivmaterialteilchen sind;

wobei ein Gewichtsverhältnis der Feststoffpositivelektrodenaktivmaterialteilchen in der Positivelektrodenaktivmaterialschicht 2 Gewichts-% oder mehr und 50 Gewichts-% oder weniger ist; und

wobei ein Gewichtsverhältnis der hohlen Positivelektrodenaktivmaterialteilchen in der Positivelektrodenaktivmaterialschicht größer als das Gewichtsverhältnis der Feststoffpositivelektrodenaktivmaterialteilchen ist.

2. Sekundärbatterie nach Anspruch 1, wobei die Hohlraum-fördernden Teilchen Graphitteilchen mit einer Teilchendichte von 1,1 g/cm$^3$ oder mehr enthalten.

3. Sekundärbatterie nach Anspruch 2, wobei ein Gewichtsverhältnis der Graphitteilchen in der Positivelektrodenaktivmaterialschicht 2 Gewichts-% oder mehr und 5 Gewichts-% oder weniger ist.

4. Sekundärbatterie nach einem der Ansprüche 1 bis 3, wobei die Druckfestigkeit der Hohlraum-fördernden Teilchen 10 MPa oder mehr ist.

5. Sekundärbatterie nach einem der Ansprüche 1 bis 4, wobei ein Verhältnis von den Hohlräumen in der Positivelektrodenaktivmaterialschicht 20% oder mehr ist.

6. Sekundärbatterie nach einem der Ansprüche 1 bis 5, wobei ein Verhältnis einer mittleren Teilchengröße der leitfähiges Material-Teilchen zu der mittleren Teilchengröße der hohlen Positivelektrodenaktivmaterialteilchen weniger als 0,1 ist.

7. Sekundärbatterie nach einem der Ansprüche 1 bis 6, wobei das leitfähiges Material-Teilchen zumindest eine Art von Teilchen ist, das aus Kohlenstoffrußen ausgewählt ist.

8. Sekundärbatterie nach einem der Ansprüche 1 bis 7, wobei jedes der hohlen Positivelektrodenaktivmaterialteilchen eine Schalensektion, die von einem Lithiumübergangsmetalloxid gebildet ist, eine Hohlsektion, die innerhalb der Schalensektion gebildet ist, und ein Durchgangsloch, das durch die Schalensektion hindurchdringt, beinhaltet.

9. Sekundärbatterie nach Anspruch 8, wobei ein Verhältnis der Hohlsektion in einem Querschnitt von jedem der hohlen Positivelektrodenaktivmaterialteilchen 5% oder mehr ist.

**Revendications**

1. Batterie secondaire (100 ; 800) comprenant :

un boîtier de batterie (300 ; 860) ;

un corps d'électrode (200 ; 850) qui est pourvu d'un collecteur de courant d'électrode positive (221 ; 811) et d'une couche de matériau actif d'électrode positive (223 ; 813) maintenue sur le collecteur de courant d'électrode positive et qui est logé dans le boîtier de batterie ;

une borne (420 ; 864) disposée sur le boîtier de batterie et reliée au corps d'électrode ;

une solution électrolytique non aqueuse qui est logée dans le boîtier de batterie et contient un agent de génération de gaz, l'agent de génération de gaz générant un gaz par réaction à une tension supérieure à une tension prédéterminée ; et

un dispositif d'interruption de courant (460 ; 865) qui est configuré pour interrompre une liaison électrique entre le corps d'électrode et la borne lorsqu'une pression interne du boîtier de batterie devient supérieure à une pression prédéterminée,

la batterie secondaire étant **caractérisée en ce que** :

la couche de matériau actif d'électrode positive comporte une pluralité de particules creuses de matériau actif d'électrode positive (610), une pluralité de particules de support de vide (630) et une pluralité de particules de matériau conducteur (620) ;

les particules de support de vide sont configurées pour fournir des vides (h) ayant un diamètre de pore supérieur ou égal à 0,5 $\mu$m dans la couche de matériau actif d'électrode positive ;

les particules de matériau conducteur sont configurées pour fournir une continuité électrique de la couche de matériau actif d'électrode positive ;

un rapport d'une taille moyenne des particules de support de vide sur une taille moyenne des particules creuses de matériau actif d'électrode positive est supérieur ou égal à 1/3 et inférieur ou égal à 2 ;

une résistance à l'écrasement des particules de support de vide est supérieure à une résistance à l'écrasement des particules de matériau conducteur ;

les particules de support de vide sont des particules solides de matériau actif d'électrode positive ;

un rapport en poids des particules solides de matériau actif d'électrode positive dans la couche de matériau actif d'électrode positive est supérieur ou égal à 2% en poids et inférieur ou égal à 50% en poids ; et

un rapport en poids des particules creuses de matériau actif d'électrode positive dans la couche de matériau actif d'électrode positive est supérieur au rapport en poids des particules solides de matériau actif d'électrode positive.

2. Batterie secondaire selon la revendication 1, dans laquelle les particules de support de vide contiennent des particules de graphite ayant une densité de particules supérieure ou égale à 1,1 g/cm$^3$.

3. Batterie secondaire selon la revendication 2, dans laquelle un rapport en poids des particules de graphite dans la couche de matériau actif d'électrode positive est supérieur ou égal à 2% en poids et inférieur ou égal à 5% en poids.

4. Batterie secondaire selon l'une quelconque des revendications 1 à 3, dans laquelle la résistance à l'écrasement des particules de support de vide est supérieure ou égale à 10 MPa.

5. Batterie secondaire selon l'une quelconque des revendications 1 à 4, dans laquelle un rapport de vides de la couche de matériau actif d'électrode positive est supérieur ou égal à 20%.

6. Batterie secondaire selon l'une quelconque des revendications 1 à 5, dans laquelle un rapport d'une taille moyenne des particules de matériau conducteur sur la taille moyenne des particules creuses de matériau actif d'électrode positive est inférieur à 0,1.

7. Batterie secondaire selon l'une quelconque des revendications 1 à 6, dans laquelle la particule de matériau conducteur est au moins un type de particule choisi parmi des noirs de carbone.

8. Batterie secondaire selon l'une quelconque des revendications 1 à 7, dans laquelle chacune des particules creuses de matériau actif d'électrode positive comporte une section de coque formée d'un oxyde de métal de transition de lithium, une section creuse formée dans la section de coque et un trou traversant qui pénètre à travers la section de coque.

9. Batterie secondaire selon la revendication 8, dans laquelle un rapport de la section creuse dans une section transversale de chacune des particules creuses de matériau actif d'électrode positive est supérieur ou égal à 5%.

# FIG. 1

# FIG. 2

# FIG. 3

# FIG. 4

# FIG. 5

# FIG. 6

810 ⟍ 814 811

813 812 813

# FIG. 7

822 821 820

824 823

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001015155 A
- JP 2012109166 A
- WO 2011067982 A
- WO 2012049779 A
- EP 1065744 A
- US 20070111101 A